Europäisches Patentamt

(19) European Patent Office

Office européen des brevets

(11) Publication number: **0 091 077**
**B1**

## (12) EUROPEAN PATENT SPECIFICATION

(45) Date of publication of patent specification: **16.06.87**

(51) Int. Cl.⁴: **G 03 C 3/00**

(21) Application number: **83103123.2**

(22) Date of filing: **29.03.83**

(54) **Photographic film assemblage.**

(30) Priority: **02.04.82 US 364804**
**14.06.82 US 388421**

(43) Date of publication of application:
**12.10.83 Bulletin 83/41**

(45) Publication of the grant of the patent:
**16.06.87 Bulletin 87/25**

(84) Designated Contracting States:
**BE CH DE FR GB IT LI NL**

(56) References cited:
**EP-A-0 000 469**
**US-A-2 176 507**
**US-A-4 335 948**

(73) Proprietor: **POLAROID CORPORATION**
**549 Technology Square**
**Cambridge, Massachusetts 02139 (US)**

(72) Inventor: **Gold, Nicholas**
**72 Morningside Drive**
**Arlington Massachusetts (US)**

(74) Representative: **Haibach, Tino, Dr. Dipl.-Phys.
et al**
**Kaufingerstrasse 8**
**D-8000 München 2 (DE)**

Courier Press, Leamington Spa, England.

## Description

The present invention relates to a photographic film assemblage comprising a film spool; a strip of photographic film coiled about the film spool, the film having a leading end configured for attachment to a film advance apparatus; means for protecting the film from exposure to light; a housing for rotatably supporting the film spool and the film, the housing including means defining a passageway through which the film may be advanced to the outside of the housing.

One of the most popular films of this type is the 35 millimeter film. The 35 millimeter film is normally carried on a spool within a lighttight cylindrical cassette. The spool is driven at the end of the cassette, and the film passes through an exit in the cylindrical wall of the cassette. The facing edges of the exit are provided with a light seal, such as black plush, to prevent exposure of the film within the cassette. The light seal is further improved because the height of the exit is small to minimize light passage.

This system is disadvantageous in that, when the cassette is to be removed from the camera, the film has first to be wound back into the cassette to avoid exposure to light. Most 35 millimeter cameras do not allow accurate rewinding of the film to prevent the leading end of the film (the leader) from being drawn into the cassette. Once the leader is inside of the cassette, its retrieval for renewed insertion into a camera for exposing unexposed sections of the film for instance, or for processing of the exposed film offers some considerable difficulty.

After the roll of film is completely exposed, the film is wound back into the cassette; it would be desirable, however, to have the leader available so the film may easily be removed from the cassette for processing. Where the leader is not accessible, the cassette must as a rule be broken open to allow removal of the film. This approach is difficult and inconvenient for amateur and commercial processor alike. The leader may also be lost in cases where the photographer has partially exposed a roll of film and desires to change to another type of film. He would have to rewind the original film into the cassette; and unless he employs extreme care in the rewinding the leader is often lost. If the photographer does not wish to waste the unexposed portion of the original film, he would somehow have to retrieve the leader to be able to thread it into the camera again. He may, of course, break open the cassette. This has to be done in the dark, and often results in damage to the cassette so that the film may not be used without a new cassette.

Attempts to eliminate this problem by preventing the leading end of the film from being pulled into the film cassette have been made. For example, the film cartridges disclosed in U.S. Patent Nos. 3,695,160 and 3,705,696 are provided with projection adapted to enter a perforation in the trailing end of the filmstrip thereby to preclude its entry into a take-up chamber. See also U.S. Patent Nos. 4,145,133 and 4,212,527, wherein the leading end of a filmstrip is disfigured in a manner to preclude its entry into a film cassette. U.S. Patent No. 4,034,393 discloses a hook secured to the leading end of the film to prevent its movement into a film cassette. While these proposed solutions may have certain advantages, they are, nevertheless, such that the filmstrip may be torn or otherwise damaged if it were subjected to further pulling force once it has been stopped. Such continued pulling force may also damage the rewinding mechanism of the camera in which the film is located.

Structures permitting the retrieval of the leading end of the film without ruining the film, the cassette or the camera are the object, for example, of U.S. Patent No. 3,261,237. This describes a tool which can reach into the film cassette and retrieve the leading end of the film. U.S. Patent Nos. 3,864,993 and 4,047,653 describe similar tools. However, these tools require proper handling, they are relatively awkward and may be misplaced in the workshop.

The leading end of a roll of 35 mm film is usually located outside the film cassette such that it may be readily attached to the film wind mechanism of a camera. However, this increases the chances that the film is prematurely exposed by more of the leading end of the film being inadvertently pulled than is required for threading it into the winding spool of a camera. Another disadvantage of having the leading end of the film located outside of the film cassette is that the film may be made of a material, such as polyester, which is capable of "lightpiping", i.e., transmitting light along its length. This may eventually fog an adjacent photosensitive layer. Accordingly, light striking an exteriorly located leading end of the film would be transmitted by the polyester film to the interior of the film cassette where it may fog the photosensitive layer of the film. Thus, the intensity of the light incident upon the light transmitting layer and the length of time of exposure to such light are factors which could result in the fogging of the film.

The problem of the instant invention is to improve a photographic film assemblage of the type as specified in the generic part of claim 1, preferably of the type adapted for the use in handheld cameras of the 35 mm type such that the leading end of the film may easily be moved to the exterior of a housing where it may be grasped manually to be attached to a film advance mechanism of a camera or film processor wherein photosensitive portions of the film remain protected against unwanted exposure.

The technical problem is solved by the features of the characterizing portion of claim 1. The invention therefore provides means for easy retrieval of the film rather than preventing the leading edge from entering the cassette. This ensures excellent light protection of the film and avoids mechanical defects of the film. Also it becomes unnecessary to carefully recoil the film within the camera to keep the leading end of the film outside the cassette.

Further developments in the structure of the exposure protecting means are defined in the subclaims.

Two embodiments of the invention are illustrated in the drawings and described in the following disclosure:

Figure 1 is a partially exploded perspective view of a photographic film assemblage in accordance with the instant invention;

Fig. 2 is an enlarged elevation side view, partly in section, showing the film assemblage of Fig. 1 in an assembled state;

Fig. 3 is an enlarged end view, partly in section, of the film assemblage of Fig. 2 with a few convolutions of film;

Fig. 4 is a partially exploded perspective view of another embodiment of the invention; and

Fig. 5a is a detailed enlarged view of parts of the leader of a roll of film of the assemblage of Fig. 4 in the two outer convolutions; and

Fig. 5b is a view similar to Fig. 5 with the convolution shown at a later stage of unwinding.

Detailed description of the invention

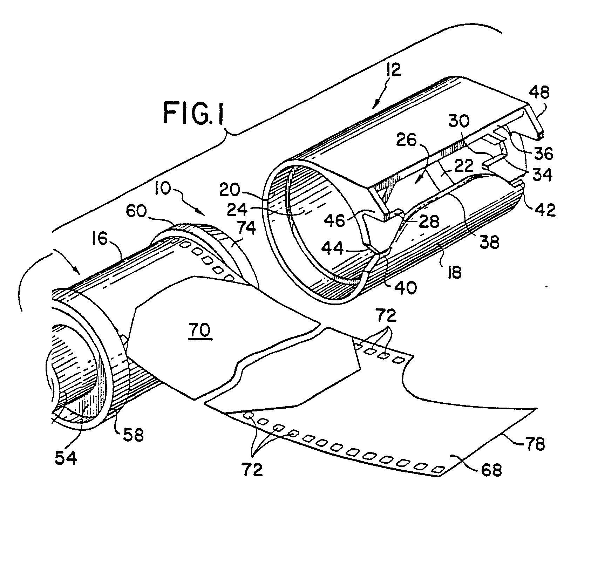

Fig. 1—3 show a photographic film assemblage 10 including a housing 12 which is preferably opaque, a hollow film spool 14 and a length of photographic film 16.

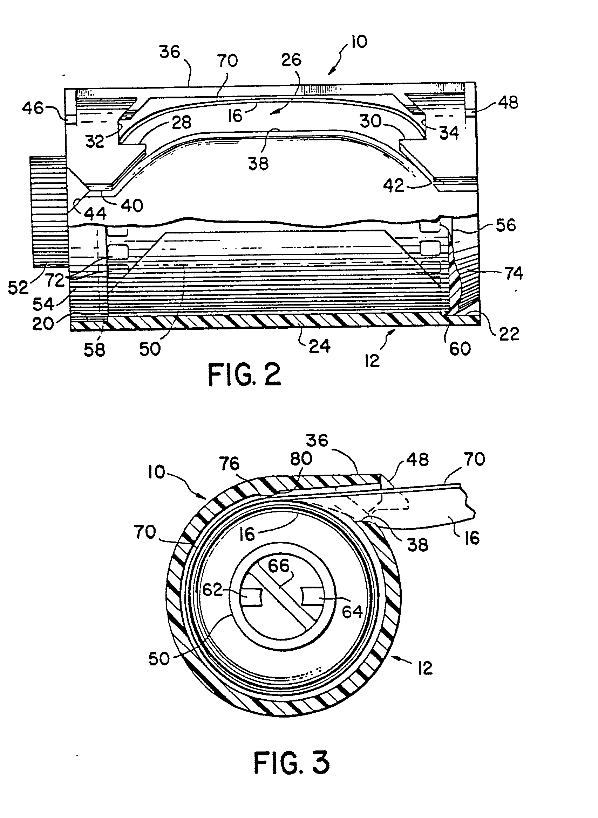

The housing 12 has a generally cylindrically configured wall 18 adapted to be received in a conventional 35 mm camera. The interior surface of the wall 18 is recessed at 20 and 22 to define the ends of an intermediate wall portion 24 of increased thickness. A film withdrawal slot or passageway 26 in the wall 18 is defined in part by a pair of laterally spaced, horizontally extending surfaces 28 and 30, a vertical surface 32 and 34 extending upwardly from the surfaces 28 and 30, respectively, a generally planar upper surface 36, and a gently curved lower surface 38. The opposite ends of the lower surface 38 terminate in horizontal shoulders 40 and 42. The shoulder 40 extends into a V-shaped slot 44; the shoulder 42 extends to the right end (Fig. 2) of the housing 12. Thus, the housing 12, which may be molded from any suitable material such as acrylonitrile-butadiene-styrene is split longitudinally by the V-shaped slot 44, the shoulders 40 and 42 and the passageway 26 such that during assembly of the film assemblage 10 its diameter may temporarily be enlarged. Protrusions 46 and 48 extend forwardly from the opposite ends of the surface 36. The protrusions 46 and 48 function to engage fixed camera structure in order properly to position the film assemblage 10 during loading into the camera, and to prevent its rotation during the withdrawal of the film 16.

The film spool 14, which is opaque, and may be of the same material as the housing 12, includes a cylindrical spindle 50 with a serrated end 52 and a pair of spaced annular collars 54 and 56 which are integral therewith and which extend radially therefrom. An annular flange 58 extends inwardly from the periphery of the collar 54 to receive the left edge of the roll of film 16, and a similar flange 60 extends from the periphery of the collar 56 toward the flange 58 to receive the right edge of the roll of film 16. The flanges 58 and 60 function 1) to limit the maximum diameter of the roll of film 16, 2) to keep the film 16 from engaging the interior surface 24 of the housing 12, and 3) to prevent the passage of light between the collars 54 and 56 and the opposite edges of the film 16. A pair of drive surfaces or tabs 62 and 64 extend inwardly towards each other inside the left end of the spindle 50, and a tab 66 extends across the opposite end of the spindle 50. The tabs 62 and 64 and the tab 66 are adapted to be engaged by a camera or a film processor mechanism for winding the film 16 upon the spool 14.

The film 16 includes a trailing end (not shown) which is fastened to the spindle 50 and a tapered leading end 68 which may be attached to a film advance mechanism of a camera or film processor. A strip of opaque material 70, e.g., Condulon (Registered Trade Mark), is secured in overlying relationship to the emulsion side of the film 16, preferably at that portion of the film, excluding the leading end 68, which comprises the outer two convolutions of the roll of film 16. The opaque material 70 is secured to the film 16 at all locations except between the two longitudinally extending rows of sprocket holes 72, thus insuring that it does not interfere with the movement of a cog of a film advance mechanism into the sprocket hole 72. The width of the opaque material 70 substantially equals the width of the film 16. The width of the film 16 is substantially equal to the space between the collars 54 and 56. Further, the width of the film 16 exceeds the distance between the facing surfaces of the flanges 58 and 60 which is greater than the width of the passageway 26 measured between the vertical surfaces 32 and 34. In one embodiment of the instant invention, the width of the film may be 34.97 mm, the distance between the facing surfaces of the collars 54 and 56 may be 35.20 mm, the distance between the facing surfaces of the flanges 58 and 60 may be 34.20 mm, and the width of the passageway 26 may be 34.04 mm.

For assembling the film assemblage 10 a strip of adhesive tape is folded in half and the spindle is secured in the bight of the fold. The extending ends of the adhesive strip are adhered to each other except at their very end portions. These are left spaced apart, like the arms of the letter "Y". The film spool 14 is then moved into the end of the housing 12 having the recessed portion 20. During such movement a chamfered portion 74 of the collar 56 engages the lefthand end of the housing 12 and spreads it to a diameter which permits entry of the film spool 14 into the housing 12. Also, during this movement, the vertical leg of the aforementioned "Y" is passed through the V-shaped groove 44 of the housing 12. Immediately the collar 56 passes the right edge of the intermediate section 24 of the housing 12, the housing 12 by its inherent resiliency snaps back to its original size thereby capturing the film spool 14. Next, the trailing end of an unexposed film is placed between the arms of the "Y" of the adhesive material. The arms are then moved into contact with the film to secure the latter to the film spool 14. The film spool 14 is then driven in a counter-clockwise manner until a predetermined length of film 16 including the leading end 68 is wound upon the spool 14. During such winding the width of the slot 26 reduced relative to the width of the film bows the film laterally, i.e., form side-to-side, thereby easing it between and under the inwardly facing flanges 58 and 60 where it resumes its substantially flat (widthwise) condition. The leading end 68 of the film is then separated from the main supply of film and completely wound into the housing 12. As mentioned hereinbefore, the leading end 68 of the film 16 is slightly tapered, longitudinally, such that it is not constrained by the annular flanges 58 and 60, as is the outer convolution of film 16. Accordingly, the only restraint on the leading end 68 of the film 16 trying to move away from the roll of film is the interior surface of the housing 12. The film assemblage 10 may then be packaged for shipment.

After removal of the film assemblage 10 from its package, it may be subjected to light, there being no possibility that the film 16 be fogged, despite the fact that the light enters freely into the housing 12 through the passageway 26. The strip of opaque material 17 prevents the passage of light through the outer convolution(s) of film and through the sprocket holes 72. Further, the annular flanges 58 and 60 prevent the light from passing into the space between the annular collars 54 and 56 and the edge of the roll of film 16. The collars 54 and 56 prevent light from entering the opposite ends of the housing 12 and from directly striking the edges of the roll of film.

To load the film assemblage into a camera for exposure of the film 16, or into a processor for processing exposed film, the film spool 14 is rotated relative to the housing 12 in order to feed the leading end 68 of the film 16 out of the housing 12. Specifically the housing 12 is held in one hand and the film spool 14 is rotated in the clockwise direction by the serrated end 52, until the leading end 68 emerges from the housing 12. As the film spool 14 is rotated in a clockwise direction, the leading end 68 biased against the internal wall 24 of the housing 12, eventually reaches the passageway 26 where it is no longer constrained to move in a circular path. The leading end 68 of the film now slides along the relatively straight interior surface of the planar upper surface 36. The bias of the leading end 68 of the film 16 causes it to follow the surface 36 until it exits from the passageway 26. As the film 16 is being unwound from the film spool 14, it is slightly bowed by the annular flanges 58 and 60. The film 16 is further bowed by the constraints put on its edges by the juncture between the horizontal and vertical surfaces 28 and 32 on one side of the passageway 26 and the horizontal and vertical surfaces 30 and 34, respectively, on the opposite side of the passageway 26 (Fig. 2). Thus constrained, the only portions of the film 16 which contact the housing 12 are its lateral edges (Fig. 2).

As will be noted in Fig. 3, the housing 12 is provided with a longitudinally extending, gently curved bump 76 which functions to guide the edge 78 of the leading end 68 over any flashing which might occur in the molding operation at location 80 which represents the juncture between two molds.

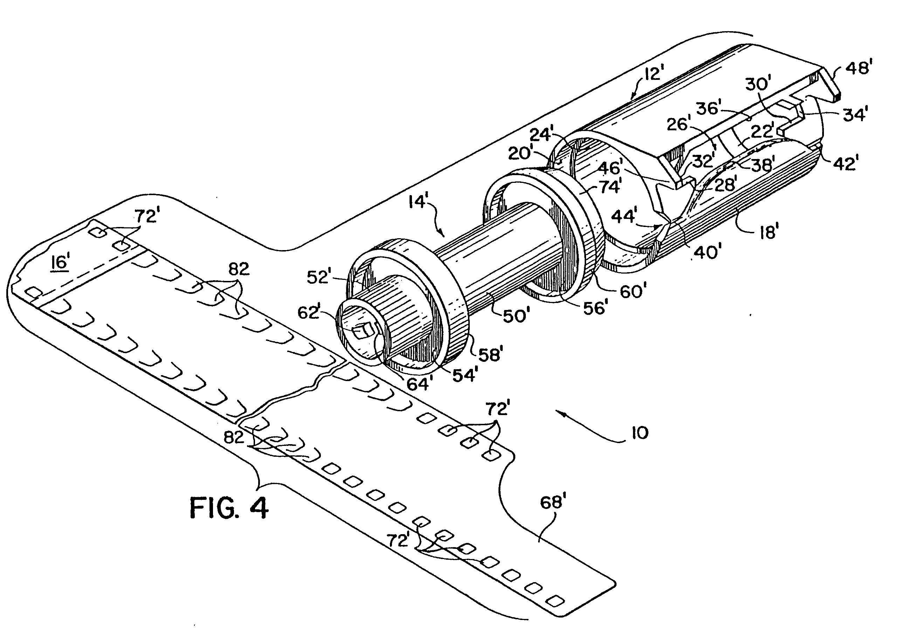

A further embodiment of the invention offering an alternative form of light shielding is shown in Fig. 4 in which parts identical to those depicted in Figs. 1 to 3 bear the same reference numerals but primed.

As in the previous embodiment the film 16' includes a trailing end (not shown) which is attached to the spindle 50', a leading end portion 68' which is adapted to be attached to a film advance mechanism of a camera or film processor. However, in this embodiment the leader 68' is itself opaque and is attached to the non-emulsion side of the film 16' as shown. Preferably, it is of a length sufficient to define at least the outer two convolutions of the roll of film. The width of the opaque leader 68', except for its very end, is substantially equal to the width of the film 16'. As in the previously described embodiment the width of the film 16 is substantially equal to the spacing between the facing surfaces of the collars 54' and 56'. Instead of being attached to the film 16' as shown, the leader 68' may be integral therewith, in which case it would be rendered opaque by application of suitable opacifying materials, coatings, etc.

As shown in Fig. 4, the leader 68' is provided along one side with a plurality of rectangularly-shaped sprocket holes 72'. As the width of the leader 68' increases, additional apertures are located on the opposite longitudinal side of the leader 68'. These apertures 72' cooperate with a sprocket wheel in a camera to meter the initial movement of the leader and the film 16' from the housing 12'. Following the apertures 72' there is provided a series of substantially V-shaped cutout sections, each of which defines an integral, forwardly extending tab 82. The tabs 82 normally lie in the plane of the surrounding opaque leader material when the leader 68' is flat and thus substantially prevent light from penetrating through that portion of the opaque leader 68'. However, when the leader 68' is curved, such as when it is coiled around the film 16' rolled up on the spindle 50' and defines the outer convolution 76' or the penultimate convolution 78' of the roll, the plastic memory of the tabs 82 causes them to maintain their flatness. Accordingly, the tabs 82, which are spaced slightly inwardly of the flanges 58' and 60', are caused to protrude out of the curved plane of the ultimate convolution 76' thereby leaving voids similar to the apertures 72' while the majority of the tabs 82 in the penultimate convolution 78' are held in its curved plane by the overlying ultimate convolution 76' thereby preserving the lighttightness.

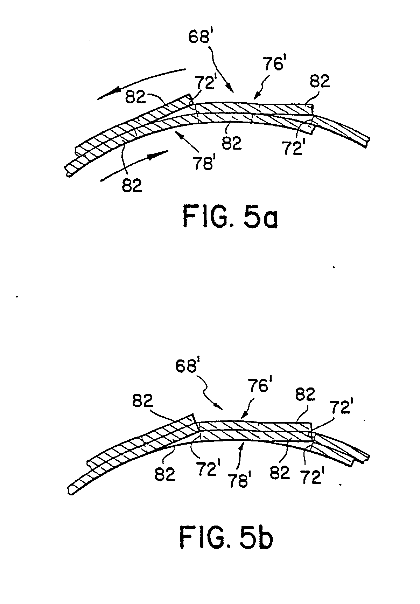

If the roll of film 16' and the opaque leader 68' were of its inherent resiliency to unwind ("clockspring") the ultimate convolution 76' and the penultimate convolution 78' would move relatively in the direction of the arrows shown in Fig. 5a until a tab 82 in the penultimate convolution 78' is located in direct alignment with a correspondingly shaped aperture 72'. When this alignment occurs, the tab 82 in the penultimate convolution 78' by its resiliency is caused to move into the aligned aperture 72', as depicated in Fig. 5b, thereby preventing any further clock-springing.

Industrial exploitability of the invention

While the invention has been described as being of particular advantage with 35 mm film it may be used to equal advantage in the other roll films as well. It combines, in an efficient manner, means for moving the leading end of a film out of a cassette if deliberately or inadvertently it has been drawn into it and means for preventing light from penetrating to photosensitive portions of the film coiled within the cassette.

Since certain changes may be made in the above-described photographic film assemblage without departing from the scope of the invention herein involved, it is intended that all matter contained in the above description or shown in the accompanying drawings shall be interpreted as illustrative and not in a limiting sense.

**Claims**

1. A photographic film assemblage comprising:
a film spool (14, 14');
a strip of photographic film (16; 16') coiled about the film having a leading end (68; 68') configured for attachment to a film advance apparatus;
means for protecting the film from exposure to light;
a housing (12; 12') for rotatably supporting the film spool and the film, the housing including means defining a passageway (26; 26') through which the film may be advanced to the outside of the housing, the film spool comprises a pair of spaced annular collars (54, 56; 54', 56') each having an annular flange (58, 69; 58' 60') extending at a right angle to the periphery of its respective collar, the film is coiled on the film spool so as to be confined by the annular flanges, the leading end of the film is configured so as not to be confined by the annular flanges, the width of the passageway in the housing is less than that of the film so that the film is widthwise bowed as it passes through the passageway to facilitate the movement of the edges of the film past the annular flanges, the passageway is unobstructed so that the leading end of the film may be freely advanced therethrough by rotating the film spool relative to the housing and the film is protected from exposure by ambient light by the fact that at least the outer convolution of the film on the spool as well as the annular collars and annular collars and annular flanges are opaque.

2. The photographic film assemblage defined in claim 1, characterized in that the two outer convolutions of the film (16) on said spool (14) are opaque.

3. The photographic film assemblage defined in claim 1, characterized in that the film comprises two longitudinally extending rows of sprocket holes (72) and that the opaqueness of said at least one outer convolution results from an opaque material (70) secured to the film (16) at all locations except between the two longitudinally extending rows of sprocket holes, so that the opaque material does not interfere with the movement of a cog of a film advance mechanism into the sprocket holes.

4. The photographic film assemblage defined in claim 1, characterized in that at least the outer convolution of said film on said spool its itself opaque.

5. The photographic film assemblage defined in claims 3 or 4, characterized in that said sprocket holes (72') are covered by tabs (82) integral with the leading end (68').

6. The photographic film assemblage defined in claim 5, characterized in that the tabs (82) extend in the direction of film withdrawal from the housing (12').

7. The photographic film assemblage defined in claim 1, characterized in that the width of the passageway (26) is less than the distance between facing surfaces of said annular flanges (58, 60).

**Patentansprüche**

1. Magazin für photographischen Film, welches folgende Teile unfaßt:
eine Filmspule (14; 14');
einen photographischen Filmstreifen (16; 16'), der auf der filmspule aufgewickelt ist und ein Vorderende (68; 68') aufweist, welches an einer Filmvorschubvorrichtung festlegbar ist;
Mittel, die den Film gegen Belichtung schützen;
ein Gehäuse (12; 12'), um die Filmspule und den Film drehbar zu lagern, wobei das Gehäuse Mittel aufweist, die einen Schlitz (26; 26') definieren, durch den der Film nach der Außenseite des Gehäuses vorgeschoben werden kann, dadurch gekennzeichnet, daß die Filmspule zwei im Abstand zueinander angeordnete Ringbunde (54, 56; 54', 56') aufweist, die je einen Ringflansch (58, 60; 58', 60') aufweisen, der rechtwinklig vom Umfang des jeweiligen Bundes vorsteht, wobei der Film auf der filmspule so aufgewickelt ist, daß er durch die Ringflansche begrenzt wird und das Vorderende des Filmes so ausgebildet ist, daß es durch die Ringflansche nicht abgestützt wird und wonei die Breite des Schlitzes im Ghäuse kleiner ist als die des Films, so daß der Film in der breiten Richtung aufgebogen wird, wenn er durch den Schilitz hindurchtritt, um die Bewegung der Ränder des Filmes an den Ringflanschen entlang zu ermöglichen, und wobei der Schlitz keinerlei Hindernisse aufweist, so daß das Vorderende des Films frei durch den Schlitz vorgeschoben werden kann, indem die Filmspule relativ zum Gehäuse gedreht wird und der Film gegenüber Belichtung durch Umgebungslicht dadurch geschützt wird, daß wenigstens die äußere Windung des Films auf der Spule und die Ringbunde und die Ringflansche lichtundurchlässig sind.

2. Magazin für photographischen Film nach Anspruch 1, dadurch gekennzeichnet, daß die beiden äußeren Windungen des Films (16) auf der Spule (14) lichtundurchlässig sind.

3. Magazin für photographischen Film nach Ansrpuch 1, dadurch gekennzeichnet, daß der Film zwei in Längsrichtung verlaufende Perforationsreihen (72) aufweist, und daß die Lichtundurchlässigkeit der wenigstens einen äußeren Windung durch ein opakes Material (70) verwirklicht wird, das am Film (16) an allen Stellen außer zwischen de beiden in Längsrichtung verlaufenden Perforationsreihen befestigt ist, so daß das opake Material die Bewegung eines Zahns eines Filmvorschubmechanismus in die Perforationen nicht stört.

4. Magazin für photographischen Film nach Anspruch 1, dadurch gekennzeichnet, daß wenigstens die äußere Windung des Films auf der Spule selbst opak ausgebildet ist.

5. Magazin für photographischen Film nach den Ansprüche 3 oder 4, dadurch gekennzeichnet, daß die Perforations-löcher (72') mit Lappen (82) abgedeckt sind, die integral mit dem Vorderende (68') verbunden sind.

6. Magazin für photographischen Film nach Anspruch 5, dadurch gekennzeichnet, daß die Lappen (82) sich in Wegzugsrichtung des Films aus dem Gehäuse (12') erstrecken.

7. Magazin für photographischen Film nach Anspruch 1, dadurch gekennzeichnet, daß die Breite des Schlitzes (26) kleiner ist als der Abstand zwischen den gegeneinander gerichteten Oberflächen der Ringflansche (58, 60).

**Revendications**

1. Ensemble de film photographique comprenant une bobine de film (14; 14') une bande de film photographique (16; 16') enroulée autour de la bobine de film, le film présentant une amorce (68; 68') configurée en vue de sa fixation à un dispositif d'avance de film, un dispositif pour protéger le film de l'exposition à la lumière, un boîtier (12; 12') pour supporter de façon rotative la bobine de film et le film, le boîtier comprenant un dispositif définissant un passage (26; 26') à travers lequel le film peut être avancé vers l'extérieur du boîtier, caractérisé en ce que: la bobine de film comprend un couple de collets annulaires espacés (54, 56; 54', 56') présentant chacun un rebord annulaire (58, 60; 58', 60') s'étendant perpendiculairement à la périphérie de son collet, le film est enroulé autour de la bobine de film de façon à ère retenu par les rebords annulaires, l'amorce du film est configurée de façon à ue pas être retenue par les rebords annulaires, la largeur du passage dans le boîer est inférieure à celle du film, de façon à ce que le film soit courbé dans le sens de la largeur lorsqu'il tranverse le passage afin de faciliter le déplacement des bords du film le long des rebords annulaires, le passage n'est pas obstrué, de façon à ce que l'amorce du film puisse être librement avancée à travers le passage par la rotation de la bobine de film par rapport au boîtier, et le film est protégé contre l'exposition à la lumière ambiante par le fait qu'au moins la spire extérieure de film sur la bobine ainsi que les collets annulaires et les rebords annulaires sont opaques.

2. Ensemble de film photographique selon la revendication 1, caractérisé en ce que les deux spires extérieures du film (16) sur ladite bobine (14) sont opaques.

3. Ensemble de film photographique selon la revendication 1, caractérisé en ce que le film comprend deux rangs, disposés dans le sens longitudinal, de trous d'engrènement (72) et en ce que l'opacité d'au moins une desdites spires résulte d'une matière opaque (70) fixée sur la totalité du film (16) sauf entre les deux rangs, disposés dans le sens longitudinal, de trous d'engrènement, de façon à ce que la matière opaque ne gêne pas le mouvement d'une dent d'un mécanisme d'avance de film dans les trous d'engrènement.

4. Ensemble de film photograhique selon la revendication 1, caractérisé en ce qu'au moins la spire extérieure dudit film sur ladited bobine est elle-même opaque.

5. Ensemble de film photographique selon la revendication 3 ou 4, caractérisé en ce que lesdits trous d'engrènement (72') sont recouverts par des languettes (82) intégrées à l'amorce (67').

6. Ensemble de film photographique selon la revendication 5, caractérisé en ce que les languettes (82) sont disposées dans le sens du retrait du film du boîtier (12').

7. Ensemble de film photographique selon la revendication 1, caractérisé en ce que la largeur du passage (26) est inférieure à la distance entre les surfaces se faisant face desdits rebords annulaires (58, 60).

FIG.1

FIG. 2

FIG. 3

FIG. 4

0 091 077

FIG. 5a

FIG. 5b

FIG. 5a

FIG. 5b